(19) Europäisches Patentamt
European Patent Office
Office européen des brevets

(11) **EP 3 020 086 B1**

(12) **EUROPEAN PATENT SPECIFICATION**

(45) Date of publication and mention
of the grant of the patent:
**11.09.2024 Bulletin 2024/37**

(21) Application number: **14737192.6**

(22) Date of filing: **03.07.2014**

(51) International Patent Classification (IPC):
*H01M 4/38* (2006.01)     *C01B 33/00* (2006.01)
*H01M 4/131* (2010.01)    *H01M 4/134* (2010.01)
*H01M 4/36* (2006.01)     *H01M 4/48* (2010.01)
*H01M 4/62* (2006.01)     *H01M 4/02* (2006.01)

(52) Cooperative Patent Classification (CPC):
**H01M 4/366; C01B 33/02; H01M 4/131;**
**H01M 4/134; H01M 4/386; H01M 4/483;**
**H01M 4/622;** H01M 2004/021; Y02E 60/10

(86) International application number:
**PCT/EP2014/064190**

(87) International publication number:
**WO 2015/003996 (15.01.2015 Gazette 2015/02)**

(54) **SILICON-BASED POWDER AND ELECTRODE CONTAINING THE SAME**

PULVER AUF SILIZIUMBASIS UND ELEKTRODE DAMIT

POUDRE À BASE DE SILICIUM ET ÉLECTRODE LA CONTENANT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **10.07.2013 EP 13175913**

(43) Date of publication of application:
**18.05.2016 Bulletin 2016/20**

(73) Proprietor: **Umicore**
**1000 Brussels (BE)**

(72) Inventors:
• **PUT, Stijn**
**B-2491 Olmen (BE)**
• **BRIDEL, Jean-Sébastien**
**F-38000 Grenoble (FR)**
• **DELPUECH, Nathalie**
**Didcot**
**Oxfordshire OX11 8QN (GB)**
• **LESTRIEZ, Bernard**
**F-44000 Nantes (FR)**
• **MOREAU, Philippe**
**F-44850 Saint Mars du Désert (FR)**
• **DUPRE, Nicolas**
**F-44200 Nantes (FR)**

(74) Representative: **Knockaert, Guy**
**Umicore**
**RDI Patent Department**
**Watertorenstraat 33**
**2250 Olen (BE)**

(56) References cited:
EP-A1- 1 978 366        EP-A1- 2 051 317
EP-A1- 2 343 758        EP-A1- 2 573 842
WO-A1-2009/144983       WO-A1-2013/087780
DE-A1- 102007 061 618   US-A1- 2004 004 301

**Description**

The invention relates to a powder, in particular a silicon-based powder and a method for manufacturing the same. The invention further relates to negative electrodes for Li-ion batteries comprising said powder and batteries comprising the same.

Lithium-ion batteries are the most widely used secondary systems for portable electronic devices. Compared to aqueous rechargeable cells, such as nickelcadmium and nickel metal hydride, Li-ion batteries (or cells) have higher energy density, higher operating voltages, lower self discharge and low maintenance requirements. These properties have made Li-ion cells the highest performing available secondary battery.

In particular graphitic carbon is used as a material for manufacturing negative electrodes ("anodes") for Li-ion cells. The graphitic carbon distinguishes by its stable cycle properties and its very high safety with regard to handling in comparison with other materials such as lithium metal, used in so-called "lithium batteries". A disadvantage however of graphitic carbon lies in its electrochemical capacitance (theoretically 372 mAh/g), which is much lower than that lithium metal (theoretically 4235 mAh/g).

Providing new materials for the negative electrode of Li-ion cells has therefore been the subject of many investigations for more than a decade. As a result of such investigations, Si-based negative electrode materials were developed which could provide significantly enhanced energy densities. Silicon has a large theoretical gravimetric capacity (3579 mAh/g) corresponding to the following reaction: $15Li + 4Si \rightarrow Li_{15}Si_4$ and a large volumetric capacity (2200 mAh/cm$^3$) also. However, the microscopic structure of silicon based materials and their huge volume expansion upon lithium intercalation had not yet allowed reaching acceptable life characteristics for their use in Li-ion cells.

To overcome some of the above mentioned drawback of silicon based materials, materials were synthesized at submicron (nano-) scale, which makes them suitable candidates for the replacement of graphitic carbon. A method to prepare submicron silicon-based powders is plasma technology, as is disclosed in WO 2008/064741 A1.

Many investigations were also carried out in an attempt to further prevent the volume expansion of Si-based materials such as the use of silicon oxide (SiOx) based materials where x can be anywhere above 0 and below 2. Although $SiO_2$ has a good stability when including Lithium ions, process also termed "lithiation", other oxides where $0<x<2$ may still show a noticeable volume expansion (see A. N. Dey, J. Electrochem. Soc., 118(10), 1547. (1971)).

Further advances in the negative electrode technology for Li-ion cells utilizing silicon and silicon-based materials can be found in US 8,124,279 disclosing electrode materials comprising nanoscale silicon particles with a BET surface area of 5 to 700 m$^2$/g; US 8,420,039 disclosing a negative electrode for a lithium-ion battery, comprising a $SiO_x$ powder with $0.7<x<1.5$; and WO 2012/000858 disclosing a Si based powder having an average primary particle size between 20 nm and 200 nm, wherein the powder has a surface layer comprising SiOx, with $0<x<2$, the surface layer having an average thickness between 0.5 nm and 10 nm, and wherein the powder has a total oxygen content equal or less than 3 percent by weight at room temperature.

In a yet further attempt to improve such electrodes, Miyachi et al. (Abs. 311, 206th Meeting, © 2004 The Electrochemical Society, Inc.) deposited SiO films on Cu foil by vapor deposition. XPS spectra of the SiO films showed the presence of five different Si oxidation states, the most prominent being $Si^{3+}$ and $Si^0$. However, the properties of such electrodes can be further optimized.

EP 2343758 discloses core-shell $SiO_x$-based powders having different values of x in the core and in the shell, with a generally low $SiO_2$ content in the shell, never exceeding a value of 41.4 % $SiO_2$.

The work reported in the publications mentioned hereinabove constitutes attempts for improving the negative electrode of a secondary Li-ion battery. However, in spite of their merits, further developments are necessary to realize the next step of improvement; in particular to provide Li-ion batteries having smaller irreversible capacity losses in the first cycle as well as a suitable cycle life.

It may thus be an object of the present invention to provide a silicon-based powder with optimized properties which in turn may advantageously influence the properties of a negative electrode for Li-ion batteries containing thereof, as well as those of said batteries comprising said electrode.

The invention provides a powder as defined in the appended claims comprising particles containing a core and a shell, said powder preferably having a surface area (BET) of at most 50 m$^2$/g, said core containing silicon (Si) and said shell containing silicon oxide $SiO_x$ with $0<x\leq2$, wherein said silicon oxide contains $Si^{n+}$ cations with n being an integer from 1 to 4, wherein said silicon oxide contains $Si^{4+}$ cations in an amount of at least 70 mol% from the total amount of $Si^{n+}$ cations.

It should be noted that throughout this document, the word silicon is used to refer to zerovalent silicon. Other oxidation states of silicon are indicated directly or through the fact that Si atoms in such other oxidations states are chemically bonded to oxygen.

Surprisingly, it was found that the powder of the invention provides a Li-ion secondary battery with a smaller irreversible capacity loss when the negative electrode of said battery is manufactured from said powder. Moreover, it was observed that said electrode has a good mechanical resistance and maintains its integrity during cycling.

According to the invention, the $SiO_x$ layer contains $Si^{n+}$ cations with n being an integer from 1 to 4, wherein the $Si^{4+}$ cations are in an amount of at least 70 mol% from the total thereof. Preferably, the amount of $Si^{4+}$ cations is at least 75 mol%, more preferably at least 80 mol%. Preferably, the summed amount of $Si^{m+}$ cations with m being an integer from 1 to 3, i.e. $Si^+ + Si^{2+} + Si^{3+}$, is at most 30 mol%, more preferably at most 25 mol%, most preferably at most 20 mol%.

Good results were obtained when the amounts' ratio according to Formula 1:

$$\left. amount\ Si^{4+} \middle/ \sum_{m=1}^{3} amount\ Si^{m+} \right. \qquad \text{Formula 1}$$

is at least 2, more preferably at least 3, most preferably at least 4. Preferably, the amount of $Si^{4+}$ cations is at least 75 mol%, more preferably at least 80 mol%

Also good results were obtained when the amounts' ratio according to Formula 2:

$$\left. amount\ Si^{4+} \middle/ amount\ Si^{+} \right. \qquad \text{Formula 2}$$

is at least 5.0, more preferably at least 7.5, most preferably at least 10.0. Preferably, the amount of $Si^{4+}$ cations is at least 75 mol%, more preferably at least 80 mol%

According to the invention, the particles forming the inventive powder contain a core and a shell. The shell which contains the $SiO_x$ may completely or partially surround said core. Preferably, said shell completely surrounds said core. Preferably, the shell has a thickness of at least 0.5 nm, more preferably at least 0.75 nm, most preferably at least 1.0 nm. Preferably, in order to maintain a good ionic and electrical conductivity of the inventive powder, said shell has a thickness of at most 10.0 nm, more preferably at most 7.5 nm, most preferably at most 5.0 nm.

In a preferred embodiment, the inventive powder comprises particles containing a core and a shell, wherein the core comprises silicon, wherein the shell has a shell outer-surface and a shell volume, wherein the shell volume comprises $SiO_x$ with 0<x<2 and the shell outer-surface comprises $SiO_2$.

In a further preferred embodiment, said core has a core-surface and said shell has a shell volume and a shell outer-surface, wherein the shell volume comprises $SiO_x$ wherein x has a continuous rate of change with respect to the thickness of the shell, from 2 at the shell outer-surface to 0 at the core-surface. It was observed that when x shows such a gradient, the stability of the inventive powder may be improved. In particular it was surprisingly observed that the inventive powder may show a decreased reactivity to humidity or water; which in turn imparts to said powder longer storage life. The decreased reactivity to water is also particularly advantageous during electrode preparation where the production of gases, e.g. hydrogen, needs to be reduced or even eliminated. The inventive powder may enable thus an optimal preparation process for negative electrodes with a homogeneous structure and optimal properties. The invention therefore further relates to a powder comprising particles containing a core and a shell, said core containing silicon (Si) and said shell having a shell volume and a shell outer-surface and containing silicon oxide $SiO_x$ with 0<x≤2, wherein x has a continuous rate of change with respect to the thickness of the shell, from 2 at the shell outer-surface to 0 at the core-surface.

In a preferred embodiment, the shell has an outer-surface, wherein said outer-surface comprises SiOH-free groups, i.e. individual SiOH groups having one OH group per Si. Preferably, the amount of SiOH groups is between 0.5 and 1.5 groups per $nm^2$, more preferably between 0.8 and 1.3 groups per $nm^2$, most preferably between 1.0 and 1.2 groups per $nm^2$. One method of providing such groups on said shell's outer-surface in the desired amounts is disclosed in example 4 of PCT/EP2012/075409, included herein in its entirety by reference. It was observed that during the preparation of a negative electrode composition where a binder, e.g. carboxymethyl cellulose (CMC), is used also to provide handleability to said composition, the presence of SiOH groups facilitates the good interaction between the inventive powder and the binder while providing an acceptable level of electrolyte degradation.

In a further preferred embodiment, the shell has an outer-surface, wherein said outer-surface comprises SiOH groups, preferably in the amounts indicated immediately hereinabove, and wherein said shell further comprises $O_zSiH_y$ groups with 1<y<3 and z=4-y. Preferably the $O_zSiH_y$ groups are $OSiH_3$ groups. The skilled person can create such groups on said shell's outer surface by following the methodology disclosed in example 4 of PCT/EP2012/075409, included herein in its entirety by reference.

The inventive powder preferably has a total oxygen content at room temperature of at least 3.0 wt% calculated based on the total amount of the powder, more preferably of at least 4.0 wt%. In a preferred embodiment, said total amount of oxygen is between 3.0 and 30.0 wt%, more preferably between 4.0 and 20.0 wt%, most preferably between 4.2 and 12.0 wt%. The skilled person may vary the amount of oxygen contained by the inventive powder by using for example the technique disclosed in WO 2011/035876 included in its entirety herein by reference.

The inventive powder preferably has a negative zeta potential in a pH interval between 3.0 and 9.5. Preferably said zeta potential is positive in a pH interval of less than 3.0. A method to adjust the zeta potential of a powder is disclosed for example in PCT/EP2012/075409.

Preferably, the inventive powder has an average primary particle size of between 0.01 $\mu$m and 1 $\mu$m, more preferably of between 20 nm and 200 nm, wherein said average primary particle size ($d_{av}$) is calculated from a specific surface area, assuming spherical particles of equal size, according to the following Formula 3:

$$d_{av} = \frac{6}{\rho \times BET} \quad \text{Formula 3}$$

in which $\rho$ refers to a theoretical density of the powder (2,33 g/cm$^3$) and BET refers to the specific surface area (m$^2$/g).

Preferably, the BET of the inventive powder is at most 30 m$^2$/g, more preferably at most 25 m$^2$/g, most preferably at most 20 m$^2$/g. Preferably, said BET is at least 5 m$^2$/g, more preferably at least 10 m$^2$/g, most preferably at least 15 m$^2$/g.

The inventive powder may further comprise an element M selected from the group consisting of transition metals, metalloids, Group IIIa elements and carbon. In one embodiment M comprises either one of more elements of the group consisting of nickel, copper, iron, tin, aluminum and cobalt. Most preferably M is Al or Fe.

The invention further relates to a method for manufacturing the inventive powder, comprising the steps of:

a. Providing a powder comprising particles, said particles comprising a core containing silicon and an initial shell having a shell outer-surface and a shell volume, wherein the shell volume comprises SiO$_x$ with 0<x≤2 and wherein said shell has a shell thickness of between 0.5 nm and 3 nm and a BET of between 10 and 40 m$^2$/g;

b. Subjecting the powder to an etching step with a HF water-based solution to partially remove and/or reduce the thickness of the SiO$_x$ shell and produce SiOH groups on the outer-surface of the shell; and

c. Subjecting the etched powder to an oxidizing heat treatment at an oxidizing temperature of between 250 °C and 750 °C for between 5 min and 80 min to obtain a powder having a BET of at most 50 m$^2$/g and containing particles comprising a core containing silicon and a shell comprising a silicon oxide SiO$_x$ with 0<x≤2, wherein said silicon oxide contains Si$^{n+}$ cations with n being an integer from 1 to 4, wherein said silicon oxide contains Si$^{4+}$ cations in an amount of at least 70 mol% from the total amount of Si$^{n+}$ cations.

The powders used in the process of the invention, are commercially available powders, from e.g. Sigma Aldrich; Alfa Aesar. Preferably, the utilized powder is a powder produced in accordance with example 1 of WO 2012/, included herein in their entirety by reference.

Preferably, the HF water-based solution has a concentration of at least 1.0 %, more preferably at least 1.5 %, most preferably at least 2.0 %. Said HF solution, preferably has a concentration of at most 5.0 %, more preferably at most 4.0 %, most preferably at most 3.0 %.

Preferably, the powder is subjected to etching by adding said powder to said HF and keep the powder in said solution for at least 5 minutes, more preferably, most preferably for at least 10 minutes. Preferably, stirring is used while etching. Preferably etching is carried out at room temperature.

According to the invention, the etching step partially removes and/or reduces the thickness of the shell and produce SiOH groups and O$_z$SiH$_y$ groups with 1<y<3 and z=4-y, on its outer-surface. Preferably, the etching step is carried out in a time interval adjusted to produce an amount of SiOH groups of between 0.8 and 1.4 groups per nm$^2$, most preferably of between 1.0 and 1.2 groups per nm$^2$.

The etched powder is then subjected to an oxidizing heat treatment at a carefully chosen oxidizing temperature of between 250 °C and 750 °C for a carefully adjusting oxidizing time of between 5 min and 80 min. The oxidation is preferably carried out in air. It was observed that the combination of the oxidizing temperature and the oxidizing time is important for obtaining powders with good properties.

Before oxidizing, however, the etched powder can be subjected to a filtering and/or washing step, preferably followed by drying. The washing is preferably carried out in a solvent volatile at a temperature close to room temperature, more preferably room temperature. Ethanol is a suitable example of such a preferred solvent.

In a preferred embodiment, the oxidizing temperature is between 200 and 400 °C and the oxidizing time is between 5 and 20 minutes. Preferably, said oxidizing temperature is between 250 and 350 °C and said oxidizing time is between 8 and 15 minutes. More preferably, said oxidizing temperature is between 290 and 310 °C and said oxidizing time is between 10 and 12 minutes.

In another preferred embodiment, the oxidizing temperature is between 600 and 800 °C and the oxidizing time is between 5 and 80 minutes. Preferably, said oxidizing temperature is between 650 and 750 °C and said oxidizing time is between 8 and 40 minutes. More preferably, said oxidizing temperature is between 690 and 810 °C and said oxidizing time is between 10 and 30 minutes.

In a more preferred embodiment, the oxidizing temperature is between 200 and 400 °C and the oxidizing time is between 25 and 80 minutes. Preferably, said oxidizing temperature is between 250 and 350 °C and said oxidizing time is between 30 and 70 minutes. More preferably, said oxidizing temperature is between 290 and 310 °C and said oxidizing time is between 30 and 60 minutes.

In the most preferred embodiment, the oxidizing temperature is between 410 and 590 °C and the oxidizing time is between 8 and 80 minutes. Preferably, said oxidizing temperature is between 450 and 550 °C and said oxidizing time is between 20 and 60 minutes. More preferably, said oxidizing temperature is between 490 and 510 °C and said oxidizing time is between 30 and 40 minutes.

The powder obtained according to the method of the invention is utilized into a composition used to manufacture a negative electrode for a Li-ion cell. Preferably said composition contains between 70 wt% and 90 wt% of the inventive powder, between 5 wt% and 15 wt% of a conductive agent, e.g. carbon, and between 5 wt% and 15 wt% of the binder with the sum of the constituents being 100 wt%.

Preferably, said electrode composition has a 1st irreversible loss of at most 560 mAh/g, more preferably of at most 450 mAh/g, even more preferably of at most 400 mAh/g, most preferably of at most 360 mAh/g when prepared and tested as instructed in sections "ELECTRODE PREPARATION" and "ELECTROCHEMICAL TESTING" hereinbelow. Preferably, the cycle life of said electrode composition is at least 300 cycles, more preferably at least 400 cycles, most preferably at least 500 cycles.

The invention further relates to an electrode suitable for use as a negative electrode for a Li-ion cell, said negative electrode comprising the inventive powder as active material. It was observed that the inventive electrode may show a decreased Li consumption and good performance on long term cycling.

The invention further relates to a Li-ion cell comprising the inventive electrode and to battery packs comprising said cell. The invention further relates to various electronic and electrical devices comprising the inventive Li-ion cell.

The invention will be further explained with the help of the following figures, examples and comparative experiments, without being however limited thereto.

Hereinafter the Figures are explained:

Figure 1 shows a chemical composition of the surface of particles forming the inventive powder as determined by DRIFT Spectroscopy. The graph represents the intensity of the IR absorbance signal in arbitrary units (a.u.) versus the wavenumber ($cm^{-1}$).

Figure 2 shows a comparison of the variation of the Oxygen content throughout the thickness of the particles' shell between the inventive particles and state of the art particles.

Figure 3 shows the chemical composition determined by DRIFT of negative electrodes of the invention.

## METHODS FOR MEASUREMENT:

- The zeta potential is determined in demineralized water at various values of pH with a zetasizer nanoseries (Malvern Instrument). The pH was adjusted with HCl 0.25M. Smoluchowski's theory is used for calculations.
- BET of a powder is determined by nitrogen adsorption method of Brunauer-Emmett-Teller (BET technique) at 77 K using an ASAP 2000 instrument from Micrometrics.
- The amount of $Si^{n+}$ cations is determined by XPS analysis and deconvolution of signals following the methodology described in Chapter 2 (Study of SiO2/Si Interface by Surface Techniques by C. Logofatu et al.) of Crystalline Silicon - Properties and Uses, edited by Prof. Sukumar Basu, ISBN 978-953-307-587-7; available from: http://www.intechopen.com/books/crystalline-silicon-properties-and-uses/study-of-sio2-si-interface-by-surface-techniques. The oxygen content of a SiOx containing material is determined as follows: the total oxygen content of powders is determined with the Leco TC600 oxygen-nitrogen analyzer. The sample is first put in a closed tin capsule. The tin capsule is then put in a graphite crucible and heated under helium as carrier gas till very high temperatures. In this heating process, the whole feed is melted and oxygen is then set free from its bonding to Si and reacts with the graphite from the crucible, forming CO or $CO_2$ gas. These gases are guided into an infrared measuring cell. The observed signal is converted to an oxygen content.

- The thickness of the $SiO_x$ containing shell of a particle can be determined by a scanning transmission electron microscope (STEM) and electron energy loss spectroscopy (EELS) measurements using a FEI Titan 50-80 commercial device with an acceleration voltage of 80 V.
- The chemical composition of the surface of a particle, i.e. the outer-surface of the particle's shell, was investigated by infrared spectroscopy (using the Diffuse Reflectance collection mode with a vertex 70 Bruker spectrometer, in the medium and near infrared ranges). DRIFT Infra-red spectrometry reveals the presence of various crystal modes as well as a Si-O-Si mode at around 1100 cm$^{-1}$. The peaks around 3500 cm$^{-1}$ are attributed to hydroxylated silanol group. Between 2260 and 2110 cm$^{-1}$, different peaks can be assigned to OySiHx deformation modes.

- The gradient in Oxygen content throughout the thickness of the $SiO_x$ containing particle's shell was measured by scanning transmission electron microscope (STEM) and electron energy loss spectroscopy (EELS) measurements using a FEI Titan 50-80 commercial device with an acceleration voltage of 80 V.

COMPARATIVE EXPERIMENT 1

A commercial crystallized Silicon nano-powder from Alfa Aesar was analyzed. The properties reported in the table under C-Ex 1 in the section 'powder characterisation' were obtained.

The powder had a BET of 57 m$^2$/g, an oxygen content of 6 wt% and an initial negative zeta potential (defined at pH6 in water). The zeta potential became positive at pH 3. The particles had an approximately 2 nm thick shell comprising $SiO_x$ with 0<x<2 and contained free and bonded silanols groups and OySiHx. The amount of free SiOH groups was about $1.2 \pm 0.2$ groups/nm$^2$.

COMPARATIVE EXPERIMENT 2

0.5 g of a silicon nano-powder was produced using the methodology described in Example 1 of WO 2012/000858 with adapted processing parameters.

The powder was analyzed, and the properties reported in the table under C-Ex 2 in the section 'powder characterization' were obtained.

EXAMPLE 1

The powder from comparative experiment 2 was stirred in a 2% HF solution with magnetic stirring for 10 minutes. Subsequently, the powder was washed with ethanol to remove HF and dried at room temperature. This dried powder was oxidized at 300°C in air during 10 minutes in a tubular furnace, as indicated in the table under Ex 1 in the section 'powder manufacturing conditions'.

The characteristics of the obtained powder are given in the table under Ex 1 in the section 'powder characterization'. The powder had an initial negative zeta potential. The zeta potential became positive at a pH lower than 2.2.

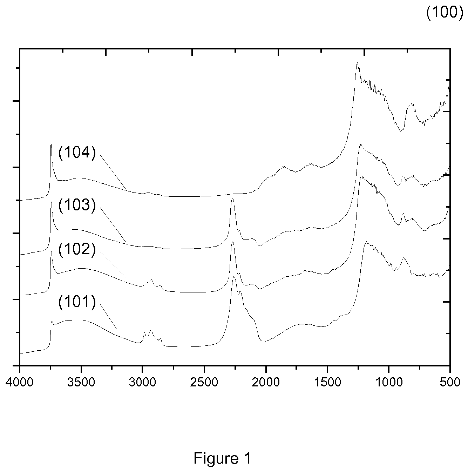

In figure 1 showing the chemical surface composition (100) given by the IR signal represented in arbitrary units (a.u.) versus the wavenumber (in cm$^{-1}$) of particles forming the various powders produced in accordance to the invention, peaks between 1200 cm$^{-1}$ and 1100 cm$^{-1}$ corresponding to Si-O-Si groups can be observed. The corresponding spectrum for the powder of this example is indicated as (101). The peaks between 2300 cm$^{-1}$ to 2100 cm$^{-1}$ can be assigned to the stretching band of OySiHx groups (with 0<y<3 and x= 4-y). The emerging peak at around 3740 cm$^{-1}$ is characteristic for a free SiOH group (or isolated silanols). The broad absorption region between 3730 cm$^{-1}$ and 3400 cm$^{-1}$ can be assigned to bonded SiOH groups (corresponding to molecular absorbed water or interaction of the oxygen of the OH groups with the hydrogen of a neighboring OH). The peak between 4600 cm$^{-1}$ and 4300 cm$^{-1}$ is characteristic of all SiOH groups (bonded and free).

The amount of free SiOH groups as determined by using ATG and infrared spectroscopy was about $0.9 \pm 0.2$ groups/nm$^2$.

EXAMPLES 2-9

Example 1 was repeated except that the powder was oxidized at 300; 500 and 700°C for between 10 and 60 minutes. The manufacturing conditions and characteristics of the powders are shown in Table under Ex 2 to Ex 9. The chemical composition of the powders of Examples 4, 5 and 9 was determined and the respective IR curves were indicated as (102), (103) and (104) in Figure 1, respectively.

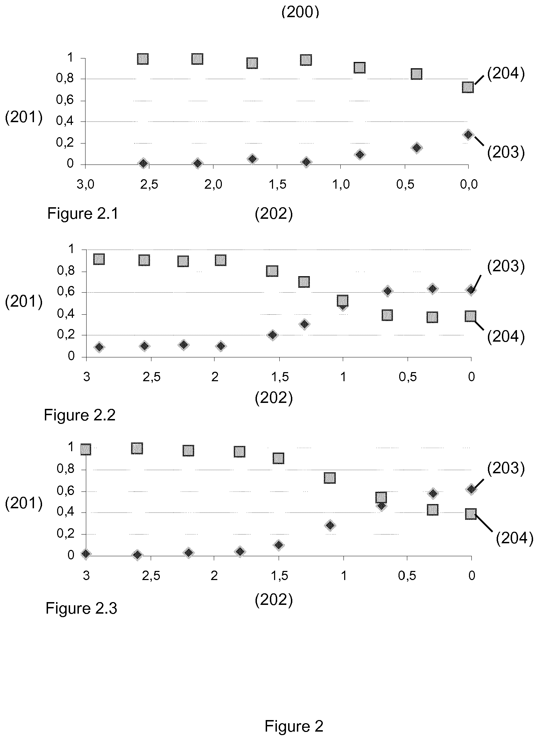

The variation (200) of the Oxygen content in % (201) in the silicon oxide $SiO_x$, i.e. the variation of x, with the thickness (202) of particles' shell (in nm) is evidenced in Figure 2 for the powders of Comparative Experiment 2 (Figure 2.1); Comparative Experiment 1 (Figure 2.2) and of Example 5 (Figure 2.3). The outer-surface of the shell corresponds to 0 nm. For the particles forming the powder of Example 5, the outer-surface of their shell contains $SiO_2$ (60% $O_2$ and 40% Si) with a content (203) of the $O_2$ (indicated by ♦) that is gradually decreasing with the shell thickness towards the core of the particle whose surface is at 3 nm. For the same powder, the content (204) of Si (indicated by ■) is gradually increasing to 100% at the core's surface. In contrast with the inventive particles, a different variation of x for the particles of the Comparative Experiments is observed. The particles of Comparative Experiment 2 do not contain $SiO_2$ at their

outer-surface of their shell whereas for both Comparative Experiments it seems that the core of the particles contains $O_2$ as well.

ELECTRODE PREPARATION

Composite electrode materials were made from 160 mg of the powders of the Examples and Comparative Experiments, 24 mg of carbon black (CB) and 16 mg of carboxymethyl cellulose (CMC). 200 mg of the composite electrode material was introduced in a silicon nitride vial. 0.75 mL of a pH3 buffer solution, prepared with 3.842 g citric acid and 0.402 g of KOH in 100 mL of deionized water, was added to the composite electrode materials. Three silicon nitride balls each of 9.5 mm diameter served as mixing media. The above composition was mixed until a slurry was obtained. A Fritsch pulverisette 7 mixer was used to mill the slurry at 500 rpm for 60 min. The slurry was tape-cast onto a 25 $\mu$m thick copper foil, dried for 12 hours at room temperature in air and then for 2 hours at 100°C in vacuum. The thickness of the obtained electrode was between 10 and 40 $\mu$m, which corresponds to 0.7-1.5 mg/cm$^2$ of silicon per electrode.

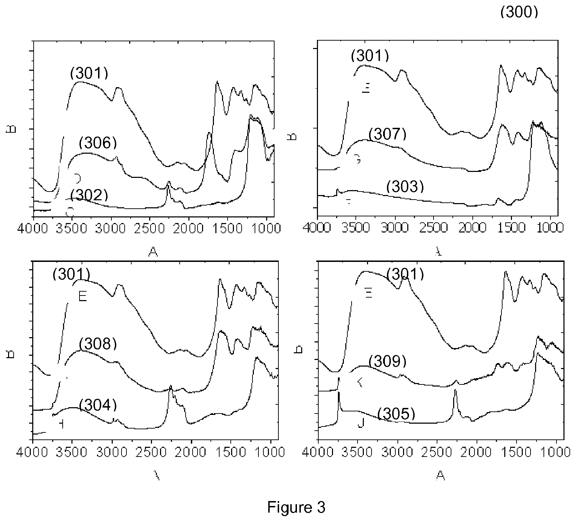

Figure 3 shows (300) the absorbance (in a.u.) versus the wavenumber (cm$^{-1}$) for CMC (301), the powders of C.Ex.1 (302); C.Ex.2 (303); Ex.1 (304) and Ex.5 (305) as well as for the mixtures CMC/C.Ex.1 (306); CMC/C.Ex.2 (307); CMC/Ex.1 (308) and CMC/Ex.5 (309). By infrared spectroscopy, a carboxylate group peak at 1580 cm$^{-1}$ can be observed in pure CMC. The peaks for the Si-CMC composite at 1640 cm$^{-1}$ can be assigned to the stretching band of carbonyl group indicating that CMC has been grafted onto the surface of Si particles.

ELECTROCHEMICAL TESTING

Electrochemical cells (Swagelok-type) were used for the electrochemical tests and were assembled in an argon filled glove box. The cells were cycled using a VMP automatic cycling data recording system (Biologic Co.) operating in galvanostatic mode between 1 and 0.005 V versus Li$^+$/Li°.

The cells comprised a 0.78 cm$^2$ disc of the composite electrode obtained as described above which was used for testing as the positive electrode. A whatman GF/D borosilicate glass-fibre sheet was used as separator, saturated with a 1M LiPF$_6$ electrolyte solution (1/1 diethyl carbonate/ethylene carbonate and 10 wt% of fluoro ethylene carbonate (FEC) and 2wt% of vinylene carbonate (VC) (LiPF$_6$ + DEC + EC + FEC + VC = 100 wt. %)). A 1 cm$^2$ Li metal disc was used as the negative (reference) electrode.

The cells were cycled with a limited discharge (alloying) capacity of 1 200 mAh/g of silicon at a rate of one lithium in two hours (C/2) both in discharge and charge (de-alloying). The first irreversible capacity after one cycle and the cycle life of the cells were measured.

The cycle life is the number of such cycles that can be performed until the mentioned capacity of 1200 mAh/g of silicon can no longer be reached.

The results are presented in the Table in the section 'battery properties of battery produced with powder'.

It is observed that in particular the cycle life of the batteries made with the powders according to examples 1-9 is much higher than the cycle life of the batteries made with the powders according to comparative experiments 1 and 2.

Also the first irreversible loss of the batteries made with the powders according to examples 1-9 is in general lower than first irreversible loss of the batteries made with the powders according to comparative experiments 1 and 2.

The inventors speculate that the beneficial effect of the invention may be explained by hypothesis that the SiO2 outer shell layer, together with lithium silicates which are the electrochemical-reaction product of lithium with SiO$_x$ with x < 2, forms a better protective layer that reduces the mechanical degradation of Si, and thereby increase the cycle life, while negative effects that SiO$_x$ with x < 2 has on the first irreversible loss are tempered by the relatively moderate amounts of Silicon suboxide

Table

| | C-Ex 1 | C-Ex 2 | Ex 1 | Ex 2 | Ex 3 | Ex 4 | Ex 5 | Ex 6 | Ex 7 | Ex 8 | Ex 9 |
|---|---|---|---|---|---|---|---|---|---|---|---|
| **Powder manufacturing conditions** | | | | | | | | | | | |
| Oxidation temperature (ºC) | - | - | 300 | 300 | 300 | 500 | 500 | 500 | 700 | 700 | 700 |
| Oxidation time (min) | - | - | 10 | 30 | 60 | 10 | 30 | 60 | 10 | 30 | 60 |
| | | | | | | | | | | | |
| **Powder characterisation** | | | | | | | | | | | |
| Shell composition | Mainly $SiO_2$ | SiOx | SiOx | SiOx | SiOx | SiOx | SiOx | SiOx | SiOx | SiOx | SiOx |
| Shell outer surface composition | SiO2 | SiOx | SiO2 | SiO2 | SiO2 | SiO2 | SiO2 | SiO2 | SiO2 | SiO2 | SiO2 |
| Shell thickness (nm) | 2 | 0.5 | 1 | nd | 1.5 | 1.5 | 1.5 | 1.5 | nd | 2 | 2 |
| Amount $Si^{4+}$ | 95% | 68% | 70% | nd | 78% | 72% | 80% | 89% | nd | 82% | 83% |
| Amount $Si^{3+}$ | < 1% | 3% | nd | nd | 8% | nd | 6% | nd | nd | nd | 4% |
| Amount $Si^{2+}$ | < 2% | 4% | nd | nd | 8% | nd | 6% | nd | nd | nd | 5% |
| Amount $Si^{1+}$ | 3% | 25% | 15% | nd | 10% | 12% | 8% | 5% | nd | 8% | 8% |
| $\sum_{m=1}^{3} amount\ Si^{m+}$ | 5% | 32% | 30% | nd | 22% | 28% | 20% | 11% | nd | 18% | 17% |
| $SiOH_{free}$ content of powder (-/nm$^2$) | 1.2 | 0.8 | 0.9 | 1.0 | 1.0 | 1.1 | 1.1 | 1.1 | 1.2 | 1.2 | 1.3 |
| BET (m$^2$/g) of powder | 54 | 25 | 26 | nd | 22 | 19 | 20 | 29 | nd | 27 | 29 |
| Oxygen content of powder (wt.%) | 6 | 4 | 2 | nd | nd | 4.2 | 4.2 | nd | nd | nd | nd |
| Isoelectric point of powder | 3 | No | <2.2 | nd | nd | nd | <2.2 | <2.2 | nd | nd | <2.2 |
| | | | | | | | | | | | |
| **Battery properties of battery produced with powder** | | | | | | | | | | | |
| 1st irreversible loss (mAh/g) | 450 | 550 | 530 | 390 | 390 | 400 | 360 | 390 | 440 | 450 | 560 |
| Cycle life (-) | 430 | 80 | 530 | 530 | 570 | 580 | 600 | 610 | 530 | 560 | 540 |
| nd= not determined | | | | | | | | | | | |

EP 3 020 086 B1

**Claims**

1. A powder comprising particles containing a core and a shell, said core containing silicon (Si) and said shell containing silicon oxide $SiO_x$ with $0<x<2$, wherein said silicon oxide contains $Si^{n+}$ cations with n being an integer from 1 to 4, **characterized in that** said silicon oxide contains $Si^{4+}$ cations in an amount of at least 70 mol% of the total amount of $Si^{n+}$ cations, said shell having a shell outer-surface and a shell volume, wherein the shell volume comprises $SiO_x$ with $0<x<2$ and the shell outer-surface comprises $SiO_2$, with the molar percentage of the $Si^{n+}$ cations and the $SiO_x$ species being measured as described in the specification.

2. A powder according to claim 1, wherein said silicon oxide contains $Si^{4+}$ cations in an amount of at most 90 mol% of the total amount of $Si^{n+}$ cations.

3. A powder according to claim 1 or 2, wherein the shell volume consists of $SiO_x$ with $0<x<2$ and the shell outer-surface consists of $SiO_2$.

4. A powder according to any of the preceding claims, wherein the core has a core-surface and wherein x is continuously decreasing with respect to the thickness of the shell, from 2 at the shell outer-surface to 0 at the core-surface.

5. A powder according to claim 4, wherein x has a continuous rate of change with respect to the thickness of the shell.

6. A powder according to any one of the preceding claims wherein said shell has a shell thickness of between 1 and 5 nm.

7. A powder according to any one of the preceding claims wherein said shell has a shell outer-surface comprising free SiOH groups.

8. A powder according to any one of the preceding claims having a total oxygen content of more than 3 wt% at room temperature.

9. A powder according to any one of the preceding claims having an average particle size of between 0.01 $\mu$m and 1 $\mu$m.

10. A powder according to any one of the preceding claims, said powder having a BET surface area of at most 50 $m^2/g$.

11. A method for preparing a powder according to claim 1, comprising the steps of:

    a. Providing a powder comprising particles, said particles comprising a core containing silicon and an initial shell having a shell outer-surface and a shell volume, wherein the shell volume comprises $SiO_x$ with $0<x<2$ and wherein said shell has a shell thickness of between 0.5 nm and 3 nm, wherein the powder has a BET surface area of between 10 and 40 $m^2/g$;
    b. Subjecting the powder to an etching step with a HF water-based solution to partially remove and/or reduce the thickness of the $SiO_x$ shell and produce SiOH groups on the outer-surface of the shell; and
    c. Subjecting the etched powder to an oxidizing heat treatment at an oxidizing temperature of between 250 °C and 750 °C for between 5 min and 80 min.

12. A negative electrode material comprising a powder according to any of claims 1-10

13. A negative electrode material according to claim 12 comprising a powder according to claim 8, further comprising a polymeric binder, wherein at least part of said binder is covalently bonded to the powder via the SiOH groups.

14. A negative electrode of a battery, comprising a negative electrode material according claim 12 or 13 and comprising an electrically conductive agent, whereby the electrode contains between 70 wt% and 90 wt% of a powder according to claims 1 to 14, between 5 wt% and 15 wt% of the electrically conductive agent and between 5 wt% and 15 wt% of the binder.

15. A rechargeable battery comprising a positive electrode, an electrolyte and a negative electrode according to claim 14.

**Patentansprüche**

1. Pulver, umfassend Teilchen, die einen Kern und eine Schale enthalten, wobei der Kern Silizium (Si) enthält und die Schale Siliziumoxid $SiO_x$ mit $0<x<2$ enthält, wobei das Siliziumoxid $Si^{n+}$-Kationen enthält, wobei n eine ganze Zahl von 1 bis 4 ist, **dadurch gekennzeichnet, dass** das Siliziumoxid $Si^{4+}$-Kationen in einer Menge von mindestens 70 Mol-% der Gesamtmenge von $Si^{n+}$-Kationen enthält, wobei die Schale eine Schalenaußenoberfläche und ein Schalenvolumen aufweist, wobei das Schalenvolumen $SiO_x$ mit $0<x<2$ umfasst und die Schalenaußenoberfläche $SiO_2$ umfasst, wobei der Molprozentsatz der $Si^{n+}$-Kationen und der $SiO_x$-Spezies wie in der Spezifikation beschrieben gemessen wird.

2. Pulver nach Anspruch 1, wobei das Siliziumoxid $Si^{4+}$-Kationen in einer Menge von höchstens 90 Mol-% der Gesamtmenge von $Si^{n+}$-Kationen enthält.

3. Pulver nach Anspruch 1 oder 2, wobei das Schalenvolumen aus $SiO_x$ mit $0<x<2$ besteht und die Schalenaußenoberfläche aus $SiC_2$ besteht.

4. Pulver nach einem der vorstehenden Ansprüche, wobei der Kern eine Kernoberfläche aufweist und wobei x in Bezug auf die Dicke der Schale, von 2 an der Schalenaußenoberfläche bis 0 an der Kernoberfläche, kontinuierlich abnimmt.

5. Pulver nach Anspruch 4, wobei x eine kontinuierliche Änderungsrate in Bezug auf die Dicke der Schale aufweist.

6. Pulver nach einem der vorstehenden Ansprüche, wobei die Schale eine Schalendicke von zwischen 1 und 5 nm aufweist.

7. Pulver nach einem der vorstehenden Ansprüche, wobei die Schale eine Schalenaußenoberfläche, umfassend freie SiOH-Gruppen, aufweist.

8. Pulver nach einem der vorstehenden Ansprüche, das einen Gesamtsauerstoffgehalt von mehr als 3 Gew.-% bei Raumtemperatur aufweist.

9. Pulver nach einem der vorstehenden Ansprüche, das eine durchschnittliche Teilchengröße von zwischen 0,01 $\mu$m und 1 $\mu$m aufweist.

10. Pulver nach einem der vorstehenden Ansprüche, wobei das Pulver einen BET-Oberflächenbereich von höchstens 50 $m^2$/g aufweist.

11. Verfahren zum Herstellen eines Pulvers nach Anspruch 1, umfassend die Schritte zum:

   a. Bereitstellen eines Pulvers, umfassend Teilchen, die Teilchen umfassend einen Kern, der Silizium enthält, und eine anfängliche Schale, die eine Schalenaußenoberfläche und ein Schalenvolumen aufweist, wobei das Schalenvolumen $SiO_x$ mit $0<x<2$ umfasst und wobei die Schale eine Schalendicke von zwischen 0,5 nm und 3 nm aufweist, wobei das Pulver eine BET-Oberfläche zwischen 10 und 40 $m^2$/g aufweist;
   b. Unterziehen des Pulvers einem Ätzschritt mit einer wasserbasierten HF-Lösung, um die Dicke der $SiO_x$-Schale teilweise zu entfernen und/oder zu reduzieren und SiOH-Gruppen auf der Schalenaußenoberfläche zu erzeugen; und
   c. Unterziehen des geätzten Pulvers einer Oxidationswärmebehandlung bei einer Oxidationstemperatur von zwischen 250 °C und 750 °C für zwischen 5 min und 80 min.

12. Negatives Elektrodenmaterial, umfassend ein Pulver nach einem der Ansprüche 1 bis 10.

13. Negatives Elektrodenmaterial nach Anspruch 12, umfassend ein Pulver nach Anspruch 8, ferner umfassend ein polymeres Bindemittel, wobei mindestens ein Teil des Bindemittels über die SiOH-Gruppen an das Pulver kovalent gebunden ist.

14. Negative Elektrode einer Batterie, umfassend ein negatives Elektrodenmaterial nach Anspruch 12 oder 13 und umfassend ein elektrisch leitfähiges Mittel, wodurch die Elektrode zu zwischen 70 Gew.-% und 90 Gew.-% ein Pulver nach den Ansprüchen 1 bis 14, zu zwischen 5 Gew.-% und 15 Gew.-% das elektrisch leitfähige Mittel und zu zwischen 5 Gew.-% und 15 Gew.-% das Bindemittel enthält.

**15.** Wiederaufladbare Batterie, umfassend eine positive Elektrode, einen Elektrolyten und eine negative Elektrode nach Anspruch 14.

**Revendications**

**1.** Poudre comprenant des particules contenant un noyau et une coquille, ledit noyau contenant du silicium (Si) et ladite coquille contenant de l'oxyde de silicium $SiO_x$ avec $0<x<2$, dans laquelle ledit oxyde de silicium contient des cations $Si^{n+}$ avec n étant un entier de 1 à 4, **caractérisée en ce que** ledit oxyde de silicium contient des cations $Si^{4+}$ dans une quantité d'au moins 70 % en moles de la quantité totale de cations $Si^{n+}$, ladite coquille ayant une surface extérieure de coquille et un volume de coquille, dans laquelle le volume de la coquille comprend $SiO_x$ avec $0< x<2$ et la surface extérieure de la coquille comprend $SiO_2$, le pourcentage molaire des cations $Si^{n+}$ et des espèces $SiO_x$ étant mesuré comme décrit dans la spécification.

**2.** Poudre selon la revendication 1, dans laquelle ledit oxyde de silicium contient des cations $Si^{4+}$ dans une proportion d'au plus 90 % en moles de la quantité totale de cations $Si^{n+}$.

**3.** Poudre selon la revendication 1 ou 2, dans laquelle le volume de la coquille est constitué de $SiO_x$ avec $0<x<2$ et la surface extérieure de la coquille est constituée de $SiO_2$.

**4.** Poudre selon l'une des revendications précédentes, dans laquelle le noyau présente une surface de noyau et dans laquelle x diminue continuellement par rapport à l'épaisseur de la coquille, de 2 à la surface extérieure de la coquille 0 à la surface du noyau.

**5.** Poudre selon la revendication 4, dans laquelle x a un taux de variation continu par rapport à l'épaisseur de la coquille.

**6.** Poudre selon l'une quelconque des revendications précédentes, dans laquelle l'épaisseur de la coquille est comprise entre 1 et 5 nm.

**7.** Poudre selon l'une quelconque des revendications précédentes, dans laquelle ladite coquille présente une surface extérieure comprenant des groupes SiOH libres.

**8.** Poudre selon l'une quelconque des revendications précédentes ayant une teneur totale en oxygène supérieure à 3 % en poids à température ambiante.

**9.** Poudre selon l'une quelconque des revendications précédentes ayant une taille moyenne de particules comprise entre 0,01 $\mu$m et 1 $\mu$m.

**10.** Poudre selon l'une quelconque des revendications précédentes, ladite poudre ayant une surface BET d'au plus 50 $m^2/g$

**11.** Procédé de fabrication d'une poudre selon la revendication 1, comprenant les étapes consistant à :

a. Fournir une poudre comprenant des particules, lesdites particules comprenant un noyau contenant du silicium et une coquille initiale ayant une surface extérieure d'enveloppe et un volume de la coquille, le volume de la coquille comprenant $SiO_x$ avec $0<x<2$ et ladite coquille ayant une épaisseur de la coquille comprise entre 0,5 nm et 3 nm, la poudre ayant une surface BET comprise entre 10 et 40 $m^2/g$ ;
b. Soumettre la poudre à une étape d'attaque avec une solution HF à base d'eau pour enlever partiellement et/ou réduire l'épaisseur de la coquille $SiO_x$ et produire des groupes SiOH sur la surface extérieure de la coquille ; et
c. Soumettre la poudre mordancée à un traitement thermique d'oxydation à une température d'oxydation comprise entre 250 °C et 750 °C pendant une durée comprise entre 5 min et 80 min.

**12.** Matériau d'électrode négative comprenant une poudre selon l'une des revendications 1 à 10

**13.** Matériau d'électrode négative selon la revendication 12, comprenant une poudre selon la revendication 8, comprenant en outre un liant polymère, dans lequel au moins une partie dudit liant est liée de manière covalente à la poudre par l'intermédiaire des groupes SiOH.

**14.** Électrode négative d'une batterie, comprenant un matériau d'électrode négative selon la revendication 12 ou 13 et comprenant un agent conducteur d'électricité, l'électrode contenant entre 70 % en poids et 90 % en poids d'une poudre selon les revendications 1 à 14, entre 5 % en poids et 15 % en poids de l'agent conducteur d'électricité et entre 5 % en poids et 15 % en poids du liant.

**15.** Batterie rechargeable comprenant une électrode positive, un électrolyte et une électrode négative selon la revendication 14.

Figure 1

(200)

Figure 2.1

(201)    (202)

Figure 2.2

(201)    (202)

Figure 2.3    (202)

Figure 2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008064741 A1
- US 8124279 B
- US 8420039 B
- WO 2012000858 A
- EP 2343758 A
- EP 2012075409 W
- WO 2011035876 A

### Non-patent literature cited in the description

- **A. N. DEY.** *J. Electrochem. Soc.,* 1971, vol. 118 (10), 1547
- **MIYACHI et al.** Abs. 311, 206th Meeting, 2004. The Electrochemical Society, Inc,
- Study of SiO2/Si Interface by Surface Techniques. **C. LOGOFATU et al.** Crystalline Silicon - Properties and Uses